# EUROPÄISCHE PATENTSCHRIFT

(11) **EP 2 377 389 B1**
(45) Veröffentlichungstag und Bekanntmachung des Hinweises auf die Patenterteilung: **26.12.2012**
(21) Anmeldenummer: 10003986.6
(22) Anmeldetag: 15.04.2010
(51) Int. Cl.: A01G 25/09

(54) **Beregnungsvorrichtung**
Sprinkling device
Dispositif d'arrosage

(43) Veröffentlichungstag der Anmeldung: 19.10.2011
(73) Patentinhaber: Grundfos Management A/S, 8850 Bjerringbro (DK)
(72) Erfinder: Stuart, David, Lubbock, Texas 79424 (US); Busch, Peter, 8850 Bjerringbro (DK)
(74) Vertreter: Vollmann, Heiko

(56) Entgegenhaltungen:
- US-A- 3 598 142
- US-A- 4 195 781
- US-A1- 2006 283 507

## Beschreibung

Die Erfindung betrifft eine Beregnungsvorrichtung mit den im Oberbegriff des Anspruchs 1 angegebenen Merkmalen.

Vorrichtungen dieser Art werden beispielsweise auf landwirtschaftlichen Nutzflächen eingesetzt, um die dort angebauten Pflanzen in ausreichendem Maße mit Wasser zu versorgen. Es sind Beregnungsvorrichtungen bekannt, beispielsweise durch die US 3 598 142 A, die einen Beregnungsarm mit vorzugsweise mehreren daran ausgebildeten Sprinklern aufweisen, mit denen die Pflanzen mit Wasser besprüht werden. Die Wasserförderung von einer Wasserquelle zu den Sprinklern erfolgt über ein externes Pumpenaggregat. Insbesondere bei einer stationär aufgebauten Beregnungsvorrichtung kann das Pumpenaggregat, das typischerweise neben der eigentlichen Beregnungsvorrichtung angeordnet ist, einem erheblichen witterungsbedingten Verschleiß unterliegen. Darüber hinaus besteht auch die Gefahr, dass die Pumpenaggregate der Beregnungsvorrichtungen das Ziel von Vandalismus werden.

Vor diesem Hintergrund liegt der Erfindung die Aufgabe zugrunde, eine Beregnungsvorrichtung zu schaffen, bei der ein Pumpenaggregat der Vorrichtung besser geschützt ist.

Gelöst wird diese Aufgabe durch eine Beregnungsvorrichtung mit den in Anspruch 1 angegebenen Merkmalen. Vorteilhafte Weiterbildungen dieser Beregnungsvorrichtung ergeben sich aus den Unteransprüchen, der nachfolgenden Beschreibung sowie der Zeichnung. Hierbei können gemäß der Erfindung die in den Unteransprüchen angegebenen Merkmale jeweils für sich aber auch in geeigneter Kombination die erfindungsgemäße Lösung gemäß Anspruch 1 weiter ausgestalten.

Die erfindungsgemäße Beregnungsvorrichtung weist eine an eine Wasserquelle anschließbare Rohrleitung auf. Hierbei ist unter einem Anschluss der Rohrleitung an der Wasserquelle ggf. auch ein Eintauchen eines Abschnitts der Rohrleitung in das Wasser der Wasserquelle zu verstehen. Die Rohrleitung weist zumindest einen Abschnitt auf, der sich ausgehend von der Oberfläche des Aufstellorts der Beregnungsvorrichtung schräg oder vorzugsweise senkrecht nach oben erstreckt, so dass eine an dem von der Wasserquelle abgewandten Ende der Rohrleitung angeordnete Beregnungseinrichtung von der zu beregnenden Fläche vertikal beabstandet ist.

An dem von der Wasserquelle abgewandten Ende dieser Rohrleitung ist als Beregnungseinrichtung ein Beregnungsarm angeordnet. Bei diesem Beregnungsarm handelt es sich zweckmäßigerweise ebenfalls um eine Rohrleitung an der mindestens ein Sprinkler ausgebildet ist. Hierbei ist unter einem Sprinkler im Sinne der Erfindung im einfachsten Fall eine an dem Beregnungsarm ausgebildete Wasseraustrittsöffnung bis hin zu einer Wasseraustrittsdüse oder einer sonst wie ausgebildete Wasseraustrittsstelle zu verstehen.

Zum Fördern des Wassers von der Wasserquelle zu dem zumindest einen an dem Beregnungsarm ausgebildeten Sprinkler ist mindestens eine Pumpe vorgesehen. Gemäß der Erfindung ist diese Pumpe innerhalb der von der Rohrleitung und dem Beregnungsarm gebildeten Verbindungsleitung von der Wasserquelle zu dem Sprinkler angeordnet. Dementsprechend ist die Pumpe vollständig von der Außenwandung der Rohrleitung bzw. der Außenwandung des Beregnungsarms umgeben und auf diese Weise vor der Außenumgebung der Beregnungsvorrichtung geschützt. Schlechte Witterungsverhältnisse wirken sich so auf die Pumpe zumindest deutlich weniger und günstigstenfalls gar nicht aus. Des Weiteren ist die Pumpe beispielsweise auch dadurch, dass sie aufgrund ihrer gekapselten Anordnung in der Leitungsverbindung nicht direkt sichtbar ist, vor einer unerlaubten Manipulation oder Entnahme, wie es bei den bislang bekannten Beregnungsvorrichtungen in einfacher Weise möglich war, besser geschützt. Ein weiterer Vorteil der erfindungsgemäßen Anordnung der Pumpe innerhalb der von der Rohrleitung und dem Beregnungsarm gebildeten Verbindungsleitung von der Wasserquelle zu dem zumindest einen Sprinkler ist darin zu sehen, dass die die Pumpe umgebende Außenwandung der Rohrleitung bzw. des Beregnungsarms eine zusätzliche Schallisolierung der Pumpe bilden kann, so dass die Betriebsgeräusche der Pumpe wenn überhaupt, nur weniger störend wahrgenommen werden können.

Bevorzugt ist 'die Pumpe innerhalb des an die Wasserquelle angrenzenden Rohrabschnitts der Rohrleitung angeordnet. Demzufolge ist die Anordnung der Pumpe im Wesentlichen direkt abströmseitig der Wasserquelle vorgesehen. Die Pumpe kann sowohl in einem horizontal verlaufenden Abschnitt der Rohrleitung als auch in einem vertikal ausgerichteten Abschnitt der Rohrleitung angeordnet sein. Ein besonders guter Schutz der Pumpe kann dann erreicht werden, wenn die Pumpe von außen nicht sichtbar in einem unterhalb des Aufstellorts der Beregnungsvorrichtung in den Boden eingegrabenen Abschnitt der Rohrleitung angeordnet ist. Alternativ kann es auch vorteilhaft sein, die Pumpe in einem frei zugänglichen Abschnitt der Rohrleitung anzuordnen, da dies z.B. an der Pumpe auszuführende Wartungsarbeiten erleichtert.

Vorteilhafterweise kann eine zweite Pumpe innerhalb des Beregnungsarms angeordnet sein. D.h., neben einer innerhalb der Rohrleitung nahe der Wasserquelle angeordneten Pumpe kann in dem Beregnungsarm eine weitere Pumpe angeordnet sein. Diese Ausgestaltung ist insbesondere dann vorteilhaft, wenn die Förderstrecke von der Wasserquelle zu dem an dem Beregnungsarm angeordneten Sprinkler bzw. den dort vorgesehenen mehreren Sprinklern vergleichsweise lang ist. In diesem Fall kann das Wasser zunächst mit der in der Rohrleitung angeordneten Pumpe bis zu der in dem Beregnungsarm angeordneten Pumpe gefördert werden und von dort mittels der letztgenannten Pumpe mit ausreichend hohem Druck zu dem bzw. den Sprinklern weitergeleitet und dort ausgesprüht werden. Ein weiterer Vorteil der Verwendung zweier Pumpen liegt darin, dass die zwei Pumpen gegenüber lediglich einer Pumpe jeweils eine geringere Leistung aber auch geringere Abmessungen aufweisen können.

Bevorzugt handelt es sich bei der zumindest einen Pumpe der erfindungsgemäßen Beregnungsvorrichtung um eine Tauchpumpe. Besonders vorteilhaft können eine innerhalb der Rohrleitung angeordnete Pumpe und eine in dem Beregnungsarm angeordnete Pumpe jeweils eine Tauchpumpe sein. Vorteilhaft werden diese Pumpen jeweils von der Wasserumgebung in der Rohrleitung bzw. in dem Beregnungsarm gekühlt. Die verwendeten Tauchpumpen sind typischerweise derart dimensioniert, dass sie in das Innenlumen der Rohrleitung bzw. in das Innenlumen des Beregnungsarms eingeführt werden können und dort befestigt werden können. Bei den verwendeten Tauchpumpen kann es sich um Tauchpumpen mit einem Laufrad oder mit mehreren hintereinander geschalteten Laufrädern also um eine ein- oder mehrstufige Kreiselpumpe handeln.

Die innerhalb der Rohrleitung und innerhalb des Beregnungsarms eingesetzten Pumpen können auch solche Pumpen sein, die das Wasser der Wasserquelle bei konstanter Laufraddrehzahl zu dem bzw. zu den an dem Beregnungsarm angeordneten Sprinklern fördern. Zur Verwirklichung eines konstanten Wasserdrucks in dem Beregnungsarm ist dann allerdings ein Druckregelventil in der Leitungsverbindung zwischen der Wasserquelle und dem bzw. den an dem Beregnungsarm angeordneten Sprinklern erforderlich, um den Wasserdruck auf einen konstanten Wert herunterzuregeln.

Vorteilhafter ist eine Ausgestaltung, bei der auf ein solches Druckregelventil verzichtet werden kann. Daher ist bevorzugt vorgesehen, dass die zumindest eine Pumpe und vorzugsweise sowohl eine in der Rohrleitung als auch eine in dem Beregnungsarm angeordnete Pumpe einen drehzahlsteuerbaren Antrieb aufweisen. Dann ist ein elektrischer Antriebsmotor der eingesetzten Pumpe bzw. Pumpen derart ansteuerbar, dass sich unterschiedliche Laufraddrehzahlen der Pumpe/Pumpen verwirklichen lassen. Die hierzu erforderlichen Steuermittel können ein integraler Bestandteil der verwendeten Pumpe bzw. Pumpen sein oder sie können in einem außerhalb der von der Rohrleitung und dem Beregnungsarm gebildeten Leitungsverbindung zwischen der Wasserquelle zu dem bzw. den Sprinklern angeordneten Steuergehäuse angeordnet sein.

Die Antriebe der Pumpen sind vorzugsweise mittels eines Frequenzumrichters gesteuert. Hierdurch lässt sich in vorteilhafter Weise ein besonders leistungseffektiver bzw. energiesparender Pumpenbetrieb bei einem gleichförmigen Wasserdurchsatz durch die Beregnungsvorrichtung verwirklichen.

Zweckmäßigerweise weist die von der Rohrleitung und dem Beregnungsarm gebildete Verbindungsleitung von der Wasserquelle zu dem Sprinkler mindestens einen von der übrigen Verbindungsleitung demontierbaren Abschnitt auf, in dem die Pumpe angeordnet ist. Dementsprechend kann ein Abschnitt der Rohrleitung und/oder des Beregnungsarms, in dem eine Pumpe angeordnet ist, von der übrigen Rohrleitung bzw. von dem übrigen Beregnungsarm getrennt werden, was eine einfache Wartung dieser Pumpe oder deren einfachen Austausch möglich macht.

Um beim Entfernen des demontierbaren Abschnitts ein Ausströmen des Wassers zu verhindern, das sich in den an den demontierbaren Abschnitt angrenzenden Abschnitten der Verbindungsleitung befindet, ist an diesen, an den demontierbaren Abschnitt angrenzenden Leitungsabschnitten vorteilhaft jeweils ein Absperrventil angeordnet. Diese Ausgestaltung ermöglicht es, vor dem Entfernen des demontierbaren Abschnitts, die nach dem Entfernen freien Enden der angrenzenden Leitungsabschnitte mit dem Absperrventil zu verschließen.

Bevorzugt sind der demontierbare Abschnitt und die daran angrenzenden Leitungsabschnitte durch Flanschverbindungen verbunden. So kann an den beiden Enden des demontierbaren Abschnitts wie auch an den freien Enden der daran angrenzenden Leitungsabschnitte jeweils ein radial nach außen kragender, ringförmiger Ansatz bzw. Flansch ausgebildet sein, wobei der demontierbare Abschnitt und die angrenzenden Leitungsabschnitte im Bereich der in Montagelage von demontierbarem Abschnitt und daran angrenzenden Abschnitten aneinander anliegenden Flanschen verschraubt sind.

Insbesondere bei Verwendung einer drehzahlgesteuerten Pumpe kann die erfindungsgemäße Beregnungsvorrichtung einen Drucksensor zum Erfassen des ausgangsseitig der Pumpe herrschenden Wasserdrucks aufweisen, der mit der Antriebssteuerung der Pumpe signalverbunden ist. Bei dem Drucksensor kann es sich z.B. um einen Absolutdrucksensor handeln oder es können auch Differenzdrucksensoren eingesetzt werden. Auf der Grundlage des von dem Drucksensor ermittelten Druckwertes kann die Laufraddrehzahl des Antriebsmotors der Pumpe bzw. Pumpen so gesteuert werden, dass in dem Beregnungsarm eingangsseitig des dort angeordneten Sprinklers immer der gewünschte vorzugsweise konstante Wasserdruck herrscht.

Darüber hinaus kann es auch vorteilhaft sein, den Wasserdurchfluss durch den Beregnungsarm zu erfassen. Hierzu kann in dem Beregnungsarm zweckmäßigerweise zumindest ein Durchflusssensor und vorzugsweise mehrere Durchflusssensoren angeordnet sein, die mit einer Steuereinrichtung signalverbunden sind. Speziell wenn an dem Beregnungsarm über dessen Länge verteilt mehrere Sprinkler angeordnet sind, kann in dem Beregnungsarm anströmseitig jedes Sprinklers ein Durchflusssensor angeordnet sein, um zu erfassen, mit welcher Wassermenge die einem jeden Sprinkler zugeordneten Flächenbereich beregnet werden.

Weiter vorteilhaft kann die Wasseraustrittsmenge der an dem Beregnungsarm angeordneten Sprinkler einzeln steuerbar sein. Hierzu können mittels einer Steuerung beispielsweise die Querschnitte der Wasseraustrittsöffnungen bzw. Wasseraustrittsdüsen der einzelnen Sprinkler durch entsprechende Ansteuerung der Sprinkler veränderbar sein, wobei die Wasseraustrittsöffnungen bzw. Wasseraustrittsdüsen ggf. auch verschlossen werden können. Diese Ausgestaltung ermöglicht es, einzelne Bereiche einer mit der erfindungsgemäßen Beregungsvorrichtung zu beregneten Fläche unterschiedlich zu bewässern. Zur Steuerung der Wasseraustrittsmenge der einzelnen Sprinkler kann jedem Sprinkler jeweils eine Steuereinrichtung zugeordnet sein oder es kann eine Steuereinrichtung vorgesehen sein, mit der die Wasseraustrittsmenge aller Sprinkler unabhängig voneinander gesteuert wird. Bevorzugt kann eine Steuereinrichtung bereitgestellt werden, mit der die in dem Beregnungsarm angeordneten Durchflusssensoren signalverbunden sind, wobei die Steuereinrichtung auf der Basis der von den einzelnen Durchflusssensoren erfassten Wasserdurchflusswerten die einzelnen Sprinkler separat ansteuert.

Bei der erfindungsgemäßen Beregnungsvorrichtung kann es sich vorteilhaft um eine Kreisflächenberegnungsvorrichtung handeln. In diesem Zusammenhang ist bevorzugt vorgesehen, dass der Beregnungsarm um eine vertikale Drehachse drehbar ist, wobei die Drehgeschwindigkeit des Beregnungsarms steuerbar ist. Hierzu kann beispielsweise eine Steuereinrichtung einen Antriebsmotors zum Erzeugen der Drehbewegung des Beregnungsarms vorzugsweise unter Berücksichtigung der von den Durchflusssensoren ermittelten Werte und auf Grundlage der an den einzelnen Sprinklern austretenden Wassermenge ansteuern.

Nachfolgend ist die Erfindung anhand von in der Zeichnung dargestellten Ausführungsbeispielen näher erläutert. In der Zeichnung zeigt:

| | | |
|---|---|---|
| Figur 1 | - | schematisch einen Teil einer Beregnungsvorrichtung in einer ersten Ausgestaltung, |
| Figur 2 | - | schematisch einen Teil einer Beregnungsvorrichtung in einer zweiten Ausgestaltung und |
| Figur 3 | - | schematisch einen Teil einer Beregnungsvorrichtung nach einer dritten Ausgestaltung. |

Bei den in den Zeichnungsfiguren dargestellten Beregnungsvorrichtungen handelt es sich um Kreisflächenberegnungsvorrichtungen, d. h. um Beregnungsvorrichtungen, mit denen eine kreisförmige Fläche mit Wasser besprüht werden kann.

Diese Beregnungsvorrichtungen weisen jeweils eine in der Zeichnung nicht dargestellte Wasserquelle, z.B. einen Brunnen, einen Kanal oder ein Bassin, auf. An der Wasserquelle ist eine Rohrleitung 2 angeschlossen bzw. taucht in diese ein. Die Rohrleitung 2 weist einen Rohrleitungsabschnitt 2a auf, der im Wesentlichen parallel zur Oberfläche des Aufstellorts der Beregnungsvorrichtung ausgerichtet ist. An dem Rohrleitungsabschnitt 2a ist über eine Flanschverbindung ein Rohrleitungsabschnitt 2b angeschlossen. Der Rohrleitungsabschnitt 2b erstreckt sich achsgleich zu dem Rohrleitungsabschnitt 2a, ist also ebenfalls im Wesentlichen parallel zur Oberfläche des Aufstellorts der Beregnungsvorrichtung ausgerichtet.

An dem von dem Rohrleitungsabschnitt 2a abgewandten Ende des Rohrleitungsabschnitts 2b ist ein Rohrbogen 4 angeflanscht, an den sich ein Rohrleitungsabschnitt 2c anschließt, der ebenfalls mittels einer Flanschverbindung an dem Rohrbogen 4 befestigt ist. Der Rohrleitungsabschnitt 2c erstreckt sich im Wesentlichen senkrecht zur Oberfläche des Aufstellorts der Beregnungsvorrichtung. Im Bereich seines von dem Rohrbogen 4 abgewandten Endes, an dem sich ein weiterer Rohrbogen 6 anschließt, stützt sich der Rohrleitungsabschnitt 2c an einem stativartigen Gestell 6 ab.

Der Rohrbogen 6 ist um eine von der Mittelachse A des Rohrleitungsabschnitts 2c gebildete Drehachse A um einen Winkelbereich von über 360° schwenkbar, d.h., drehbar gelagert. An dem von dem Rohrleitungsabschnitt 2c abgewandten Ende des Rohrbogens 6 ist ein Beregnungsarm 10 angeschlossen. Die Grundausrichtung dieses Beregnungsarms 10 ist im Wesentlichen parallel zur Oberfläche des Aufstellorts der Beregnungsvorrichtung. Typischerweise ist auch der Beregnungsarm 12 zusammen mit dem Rohrbogen 6 um einen Winkel von mehr als 360° schwenkbar, d.h. um die Drehachse A verfahrbar.

Der Beregnungsarm 10 besteht aus mehreren Rohleitungsabschnitten 12, die mittels Muffen 14 miteinander verbunden sind. Die Rohrleitungsabschnitte 12 weisen eine bogenförmige Wölbung auf. Im Bereich der Muffen 14 stützt sich der Beregnungsarm 10 über Fahrgestelle 16 auf der Oberfläche des Aufstellorts ab. Die einzelnen Rohrleitungsabschnitte 12 werden durch fachwerkartige Stützkonstruktionen aus Längsstützen 18 und Schrägstützen 20 stabilisiert.

An den einzelnen Rohrleitungsabschnitten 12 des Beregnungsarms 10 sind jeweils an deren Mantelflächen mehrere Düsen 22 angeordnet, die mit dem Innenlumen der Rohrleitungsabschnitte 12 wasserleitend kommunizieren. Die Düsen 22, die an den Rohrleitungsabschnitten 12 über deren Länge im Wesentlichen gleichmäßig beabstandet angeordnet sind, bilden Sprinkler 22 der Beregnungsvorrichtung, mit denen das Wasser der Wasserquelle mittels der Beregnungsvorrichtung über eine zu befeuchtende Fläche versprüht werden kann.

Um das Wasser der Wasserquelle über die von der Rohrleitung 2 und den Beregnungsarm 10 gebildete Verbindungsleitung zu den Sprinklern 22 zu fördern, ist eine Pumpe 24 vorgesehen. Bei der Pumpe 24 handelt es sich um eine Tauchpumpe 24, die innerhalb des Rohrleitungsabschnitts 2b der Rohrleitung 2 angeordnet ist. Aufgrund dieser Anordnung der Tauchpumpe 24 ist diese nicht direkt zugänglich und somit geschützt. Andererseits kann die Tauchpumpe 24 durch Lösen der Flanschverbindungen des Rohrleitungsabschnitts 2b mit dem Rohrleitungsabschnitt 2a und dem Rohrbogen 4 in einfacher Weise demontiert werden und dann gewartet oder ausgetauscht werden. Des Weiteren ist die Anordnung der Tauchpumpe 24 in dem Rohrleitungsabschnitt 2b aufgrund ihrer Querschnittsdimensionierung derart, dass zwischen der äußeren Mantelfläche der Tauchpumpe 24 und der Innenwandung des Rohrleitungsabschnitts 2b ein mit Wasser gefüllter Ringspalt besteht, was eine gute Abfuhr der von der Pumpe erzeugten Wärme gewährleistet.

Um bei der Demontage des Rohrleitungsabschnitts 2b mit der darin befindlichen Tauchpumpe 24 zu verhindern, dass eventuell in dem Rohrbogen 4 und dem Rohrleitungsabschnitt 2a befindliches Wasser auslaufen kann, sind sowohl der Rohrleitungsabschnitt 2a als auch der Rohrbogen 4 jeweils mit einem aus der Zeichnung nicht ersichtlichen Absperrventil ausgestattet.

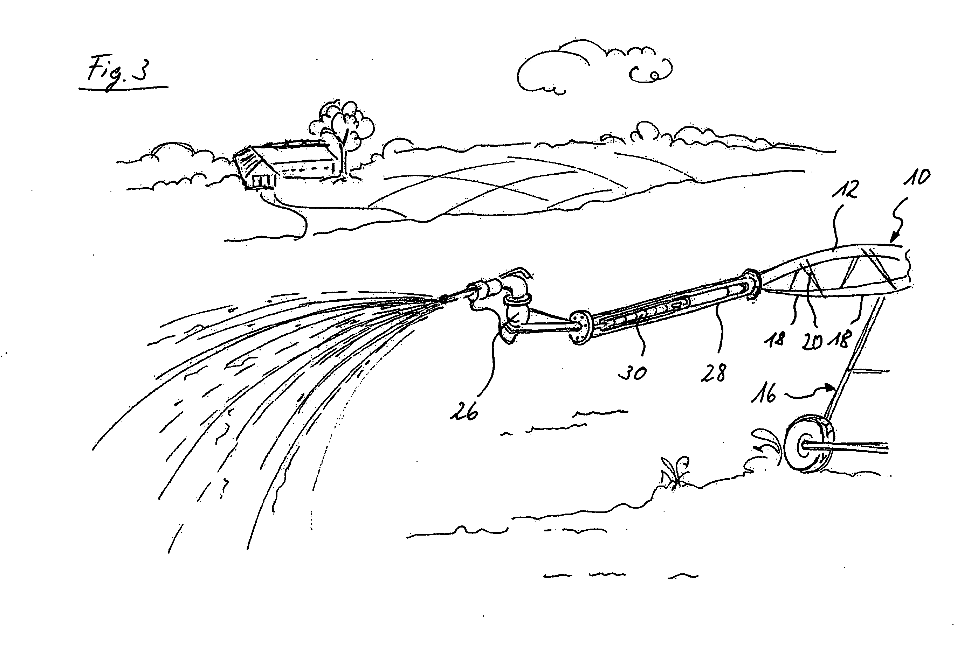

Bei der in Fig. 3 dargestellten Beregnungsvorrichtung ist an dem von der Rohrleitung 2 abgewandten Ende des Beregnungsarms 10 ein Sprinkler 26 in Form einer Spritzpistole 26 angeordnet. Eingangsseitig des Sprinklers 26 ist ein Rohrleitungsabschnitt 28 angeordnet, an dem der Sprinkler 26 mittels einer weiteren Flanschverbindung befestigt ist. Der Rohrleitungsabschnitt 28 ist ein Teil des Beregnungsarms 10 und an dem von dem Sprinkler 26 abgewandten Ende an einem Rohleitungsabschnitt 12 angeflanscht. Innerhalb des Rohrleitungsabschnitts 28 ist eine weitere Pumpe 30, bei der es sich auch um eine Tauchpumpe 30 handelt, angeordnet Auch die Tauchpumpe 30 kann zu Wartungs- oder Austauschzwecken durch eine einfache Demontage des Rohrleitungsabschnitts entnommen werden.

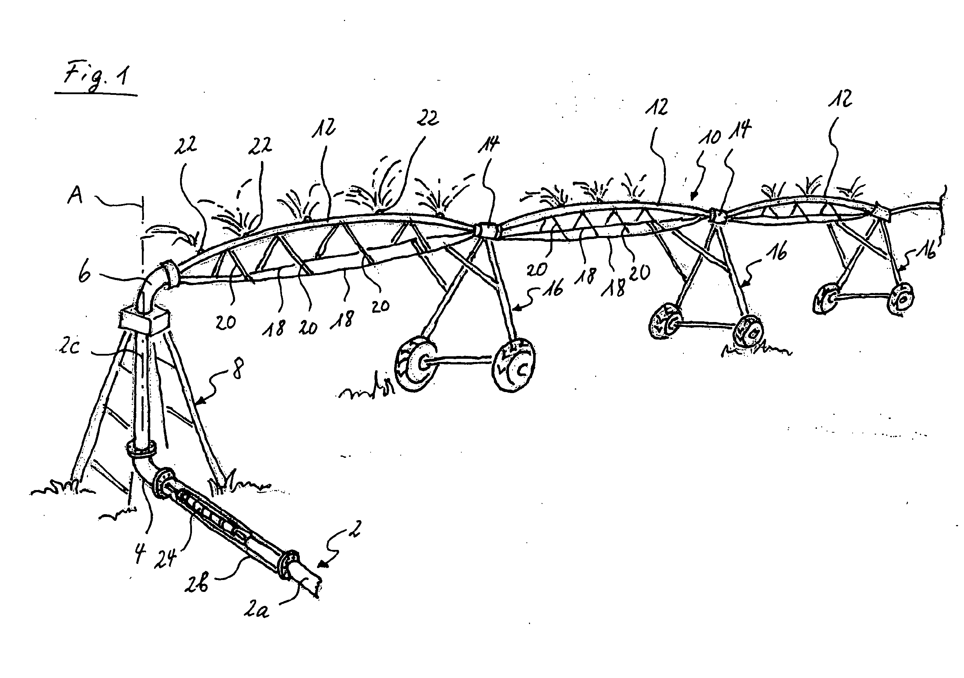

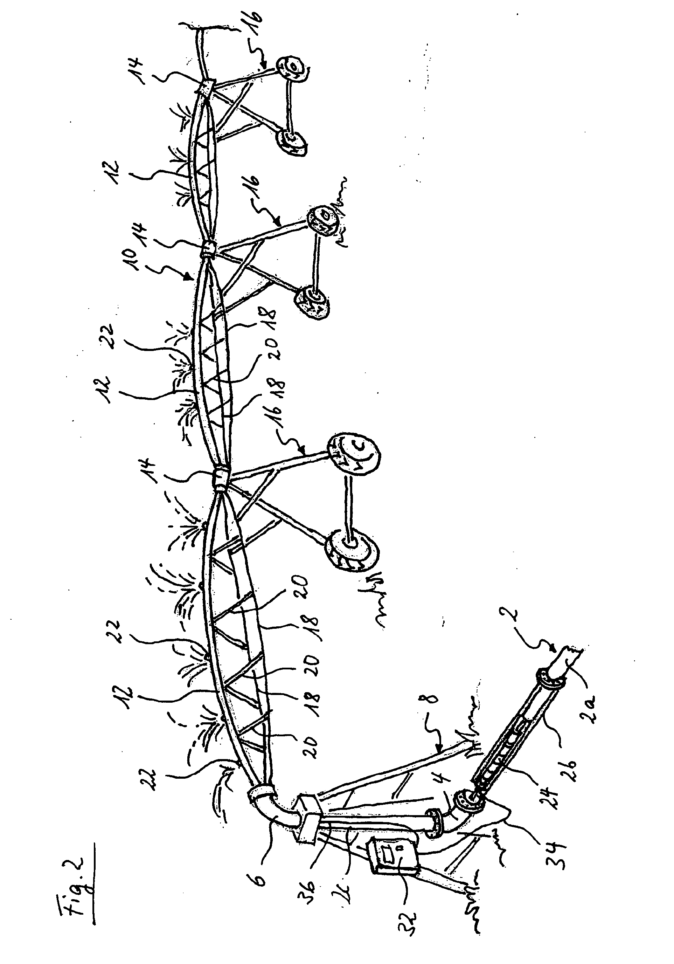

Bei der innerhalb des Rohrleitungsabschnitts 2b angeordneten Tauchpumpe 24 handelt es sich um eine solche Tauchpumpe, die einen drehzahlsteuerbaren Antrieb aufweist. Die hierzu erforderliche Steuerung ist bei der in Fig. 1 dargestellten Beregnungsvorrichtung ein integraler Bestandteil der Tauchpumpe 24. Im Gegensatz hierzu ist bei der in Fig. 2 dargestellten Beregnungsvorrichtung eine externe Steuerung vorgesehen, die in einem an dem Gestell 8 befestigten Steuerungsgehäuse 32 angeordnet ist. Von dem Steuerungsgehäuse 32 führt eine elektrische Versorgungs- und Signalleitung 34 durch eine an dem Rohrleitungsabschnitt 2b ausgebildete Durchbrechung zu der Tauchpumpe 24. Darüber hinaus führt eine weitere elektrische Versorgungs- und Signalleitung 36 zu einer weiteren, in Fig. 2 nicht dargestellten Tauchpumpe, die in dem Beregnungsarm 10 angeordnet ist.

### Bezugszeichenliste

| | | |
|---|---|---|
| 2 | - | Rohrleitung |
| 2a, 2b, 2c | - | Rohrleitungsabschnitt |
| 4 | - | Rohrbogen |
| 6 | - | Rohrbogen |
| 8 | - | Gestell |
| 10 | - | Beregnungsarm |
| 12 | - | Rohrleitungsabschnitt |
| 14 | - | Muffe |
| 16 | - | Fahrgestell |
| 18 | - | Längsstütze |
| 20 | - | Schrägstütze |
| 22 | - | Düse, Sprinkler |
| 24 | - | Pumpe, Tauchpumpe |
| 26 | - | Sprinkler, Spritzpistole |
| 28 | - | Rohrleitungsabschnitt |
| 30 | - | Pumpe, Tauchpumpe |
| 32 | - | Steuerungsgehäuse |
| 34 | - | Versorgungs- und Signalleitung |
| 36 | - | Versorgungs- und Signalleitung |
| | | |
| A | - | Mittelachse, Drehachse |

## Patentansprüche

1. Beregnungsvorrichtung mit einer an einer Wasserquelle anschließbaren Rohrleitung (2), an deren von der Wasserquelle abgewandten Ende ein Beregnungsarm (10) angeordnet ist, sowie mit mindestens einer Pumpe (24, 30) zum Fördern von Wasser von der Wasserquelle zu mindestens einem an dem Beregnungsarm (10) ausgebildeten Sprinkler (22, 26), **dadurch gekennzeichnet, dass** die Pumpe (24, 30) innerhalb der von der Rohrleitung (2) und dem Beregnungsarm (10) gebildeten Verbindungsleitung von der Wasserquelle zu dem Sprinkler (22, 26) angeordnet ist.

2. Beregnungsvorrichtung nach Anspruch 1, **dadurch gekennzeichnet, dass** eine Pumpe (24) innerhalb der Rohrleitung (2) angeordnet ist.

3. Beregnungsvorrichtung nach einem der vorangehenden Ansprüche, **dadurch gekennzeichnet, dass** eine zweite Pumpe (30) innerhalb des Beregnungsarms (10) angeordnet ist.

4. Beregnungsvorrichtung nach einem der vorangehenden Ansprüche, **dadurch gekennzeichnet, dass** die zumindest eine Pumpe (24, 30) eine Tauchpumpe(24, 30) ist.

5. Beregnungsvorrichtung nach einem der vorangehenden Ansprüche, **dadurch gekennzeichnet, dass** die zumindest eine Pumpe (24, 30) einen drehzahlsteuerbaren Antrieb aufweist.

6. Beregnungsvorrichtung nach Anspruch 5, **dadurch gekennzeichnet, dass** der Antrieb der Pumpe (24, 30) mittels eines Frequenzumrichters gesteuert ist.

7. Beregnungsvorrichtung nach einem der vorangehenden Ansprüche, **dadurch gekennzeichnet, dass** die von Rohrleitung (2) und Beregnungsarm (10) gebildete Verbindungsleitung von der Wasserquelle zu dem Sprinkler (22, 26) mindestens einen von der übrigen Verbindungsleitung demontierbaren Abschnitt aufweist, in dem die Pumpe (24, 30) angeordnet ist.

8. Beregnungsvorrichtung nach Anspruch 7, **dadurch gekennzeichnet, dass** an den an den demontierbaren Abschnitt angrenzenden Leitungsabschnitten jeweils ein Absperrventil angeordnet ist.

9. Beregnungsvorrichtung nach einem der Ansprüche 7 oder 8, **dadurch gekennzeichnet, dass** der demontierbare Abschnitt und die daran angrenzenden Leitungsabschnitten durch Flanschverbindungen verbunden sind.

10. Beregnungsvorrichtung nach einem der vorangehenden Ansprüche, **dadurch gekennzeichnet, dass** ein Drucksensor zum Erfassen des ausgangsseitig der Pumpe herrschenden Wasserdrucks vorgesehen ist, der mit einer Antriebssteuerung der Pumpe signalverbunden ist.

11. Beregnungsvorrichtung nach einem der vorangehenden Ansprüche, **dadurch gekennzeichnet, dass** in dem Beregnungsarm (10) zumindest ein Durchflusssensor und vorzugsweise mehrere Durchflusssensoren angeordnet sind, die mit einer Steuereinrichtung signalverbunden sind.

12. Beregnungsvorrichtung nach einem der vorangehenden Ansprüche, **dadurch gekennzeichnet, dass** die Wasseraustrittsmenge der an dem Beregnungsarm (10) angeordneten Sprinkler (22, 26) einzeln steuerbar ist.

13. Beregnungsvorrichtung nach einem der vorangehenden Ansprüche, **dadurch gekennzeichnet, dass** der Beregnungsarm (10) um eine vertikale Drehachse (A) drehbar ist, wobei die Drehgeschwindigkeit des Beregnungsarms (10) steuerbar ist.

## Claims

1. An irrigation device with a pipe conduit (2) which is connectable to a water source and on whose end which is away from the water source an irrigation arm (10) is arranged, as well as with at least one pump (24, 30) for delivering water from the water source to at least one sprinkler (22, 26) formed on the irrigation arm (10), **characterised in that** the pump (24, 30) is arranged within the connection conduit from the water source to the sprinkler (22, 26), said connection conduit being formed by the pipe conduit (2) and the irrigation arm (10).

2. An irrigation device according to claim 1, **characterised in that** a pump (24) is arranged within the pipe conduit (2).

3. An irrigation device according to one of the preceding claims, **characterised in that** a second pump (30) is arranged within the irrigation arm (10).

4. An irrigation device according to one of the preceding claims, **characterised in that** the at least one pump (24, 30) is a submersible pump (24, 30).

5. An irrigation device according to one of the preceding claims, **characterised in that** the at least one pump (24, 30) has a speed-controllable drive.

6. An irrigation device according to claim 5, **characterised in that** the drive of the pump (24, 30) is controlled by way of a frequency converter.

7. An irrigation device according to one of the preceding claims, **characterised in that** the connection conduit from the water source to the sprinkler (22, 26) and which is formed by the pipe conduit (2) and the irrigation arm (10), comprises at least one section which may be disassembled from the remaining connection conduit and in which the pump (24, 30) is arranged.

8. An irrigation device according to claim 7, **characterised in that** in each case a shut-off valve is arranged on the conduit sections which are adjacent to the disassemblable section.

9. An irrigation device according to one of the claims 7 or 8, **characterised in that** the disassemblable section and the conduit sections which are adjacent thereto, are connected by way of flange connections.

10. An irrigation device according to one of the preceding claims, **characterised in that** a pressure sensor for detecting the water pressure prevailing at the exit side of the pump, and which is signal-connected to the drive control of the pump, is provided.

11. An irrigation device according to one of the preceding claims, **characterised in that** at least one throughput sensor and preferably several throughput sensors, which are signal connected to a control device, are arranged in the irrigation arm (10).

12. An irrigation device according to one of the preceding claims, **characterised in that** the water exit quantity of the sprinklers (22, 26) arranged on the irrigation arm (10) may be individually controlled.

13. An irrigation device according to one of the preceding claims, **characterised in that** the irrigation arm (10) is rotatable about a vertical rotation axis (A), wherein the rotational speed of the irrigation arm (10) may be controlled.

## Revendications

1. Dispositif d'arrosage comprenant une tuyauterie (2) pouvant être raccordée à une source d'eau, à l'extrémité, opposée à la source d'eau, de laquelle est disposé un bras d'arrosage (10), et au moins une pompe (24, 30) destinée au transport de l'eau de la source d'eau jusqu'à au moins un arroseur (22, 26) formé sur le bras d'arrosage (10), **caractérisé en ce que** la pompe (24, 30) est disposée à l'intérieur du conduit de raccordement, formé de la tuyauterie (2) et du bras d'arrosage (10), allant de la source d'eau à l'arroseur (22, 26).

2. Dispositif d'arrosage selon la revendication 1, **caractérisé en ce qu'**une pompe (24) est disposée à l'intérieur de la tuyauterie (2).

3. Dispositif d'arrosage selon l'une des revendications précédentes, **caractérisé en ce qu'**une deuxième pompe (30) est disposée à l'intérieur du bras d'arrosage (10).

4. Dispositif d'arrosage selon l'une des revendications précédentes, **caractérisé en ce que** la pompe (24, 30), au moins au nombre de une, est une pompe submersible (24, 30).

5. Dispositif d'arrosage selon l'une des revendications précédentes, **caractérisé en ce que** la pompe (24, 30), au moins au nombre de une, présente un entraînement à vitesse réglable.

6. Dispositif d'arrosage selon la revendication 5, **caractérisé en ce que** l'entraînement de la pompe (24, 30) est commandé au moyen d'un convertisseur de fréquence.

7. Dispositif d'arrosage selon l'une des revendications précédentes, **caractérisé en ce que** le conduit de raccordement, formé de la tuyauterie (2) et du bras d'arrosage (10), allant de la source d'eau à l'arroseur (22, 26) présente au moins une portion démontable du reste du conduit de raccordement, dans laquelle est disposée la pompe (24, 30).

8. Dispositif d'arrosage selon la revendication 7, **caractérisé en ce qu'**une soupape d'arrêt est disposée sur chacune des portions de conduit contiguës à la portion démontable.

9. Dispositif d'arrosage selon l'une des revendications 7 ou 8, **caractérisé en ce que** la portion démontable et les portions de conduit contiguës à celle-ci sont reliées par des raccords à brides.

10. Dispositif d'arrosage selon l'une des revendications précédentes, **caractérisé en ce qu'**est prévu un capteur de pression pour détecter la pression d'eau qui règne à la sortie de la pompe, lequel est relié par signaux à la commande d'entraînement de la pompe.

11. Dispositif d'arrosage selon l'une des revendications précédentes, **caractérisé en ce que** sont disposés dans le bras d'arrosage (10) au moins un capteur de débit et de préférence plusieurs capteurs de débit, qui sont reliés par signaux à un dispositif de commande.

12. Dispositif d'arrosage selon l'une des revendications précédentes, **caractérisé en ce que** le débit d'eau à la sortie des arroseurs (22, 26) disposés sur le bras d'arrosage (10) peut être commandé individuellement.

13. Dispositif d'arrosage selon l'une des revendications précédentes, **caractérisé en ce que** le bras d'arrosage (10) peut pivoter autour d'un axe de rotation vertical (A), la vitesse de rotation du bras d'arrosage (10) pouvant être commandée.
